Europäisches Patentamt

European Patent Office

Office européen des brevets

(11) Publication number: **0 180 832**
**B1**

(12) **EUROPEAN PATENT SPECIFICATION**

(45) Date of publication of patent specification: **25.01.89**

(21) Application number: **85113248.0**

(22) Date of filing: **18.10.85**

(51) Int. Cl.⁴: **E 06 B 9/209, E 06 B 9/204**

(54) **A screen-locking device for use in roll blinds.**

(30) Priority: **27.10.84 JP 225145/84**

(43) Date of publication of application:
**14.05.86 Bulletin 86/20**

(45) Publication of the grant of the patent:
**25.01.89 Bulletin 89/04**

(84) Designated Contracting States:
**AT BE CH DE FR GB IT LI LU NL SE**

(56) References cited:
**EP-A-0 056 088**

(73) Proprietor: **TOSO KABUSHIKI KAISHA (TOSO COMPANY, LIMITED)**
**4-9, Shinkawa 1-chome, Chuo-ku**
**Tokyo (JP)**

(72) Inventor: **Shoji, Yoshihiro**
**197-13, Gokomutsumi**
**Matsudo-shi Chiba-ken (JP)**

(74) Representative: **Bardehle, Heinz, Dipl.-Ing. et al**
**Patent- und Rechtsanwälte Bardehle-**
**Pagenberg-Dost-Altenburg & Partner**
**Galileiplatz 1 Postfach 86 06 20**
**D-8000 München 86 (DE)**

Courier Press, Leamington Spa, England.

## Description

The present invention relates to a screen-locking device for use in roll blinds of the type employing a cord or chain for operation of the screen.

The roll blind of the type having a cord or chain for operation of the screen is provided with a screen-locking device disposed between the cord-pulley and the screen-roll on which the screen is wound. The device prevents the screen-roll from being rotated by the weight of the screen, inclusive of the weight of the bar attached to the screen, while the cord is free.

The known device, as disclosed under EP—A—0 056 088, has a brake drum and a coil spring fitted around the brake drum for transmitting a rotation force from a cord-pulley to a screen-roll and for braking a rotation force from the screen roll, a disk integrally coupled with the screen-roll and formed with an opening, a tongue formed on the cord-pulley, the coil spring having the opposite ends thereof received in the opening in which the tongue is also received between the coil spring ends. Whenever the weight of the screen is going to rotate the screen roll, the coil spring is fastened on the brake drum to detend the rotation of the screen-roll. Upon rotation of the cord-pulley by hand, the coil spring is loosened to rotate with the screen-roll.

The device is required to have a large braking force when the screen, inclusive of the weight bar, is relatively heavy. Otherwise, the screen-roll would easily be rotated by the weight of the screen. On the other hand, in the case of a roll blind with an auxiliary spring-motor to balance the weight of the screen, inclusive of the weight bar, for facilitation of manual operation, the braking force is not needed to be large but rather desired to be so small that the screen can be pulled down by hand. Therefore, the device desirably had an adjustable braking force for use with the both type roll blinds.

The known device can not alter its braking forces without changing the coil spring. However, there is a problem that the coil spring is not easy to be removed from and reset in the device.

The present invention as claimed is intended to provide a remedy. It solves the problem of how to easily adjust a braking force in the screen-locking device for use in a roll blind of the type having a fixed shaft, a screen-roll rotatably supported by the fixed shaft, a screen wound on the screen-roll, a cord or chain for operation of the screen and a cord-pulley rotatably fitted on the fixed shaft. The device according to the invention comprises a brake drum formed on the fixed shaft, a coil spring fitted around the brake drum, a sleeve removably coupled with the screen-roll for rotation therewith, a key provided at one side thereof with a projection and reversibly fitted in the sleeve to set its projection either of the both ways, the cord-pulley having a tubular portion loosely fitted on the coil spring and an opening formed in the tubular portion, the coil spring having its both ends which are crossed in a U-shaped form when axially viewed and extends redially outwardly into the opening. When the key is set one way in which the projection is between the both crossed ends to fasten the coil spring on the brake drum, the device produces a large braking force. When key is set the other way in which the projection is out of the both crossed ends, the device produces a small braking force.

In preference, the sleeve is rotatably mounted on the fixed shaft and axially removably fixed to the screen-roll, so that the key is reversibly set with ease when the sleeve is removed from the screen-roll. The opening in the tubular portion of the cord-pulley is desirably stepped in a manner that its wide part has a peripheral width slightly larger than that of the both ends of the coil spring, the narrow part having a width slightly larger than that of the projection. The key has an outer surface peripherally aligned with that of the sleeve.

When the key is set one way in which the projection situates between the both crossed ends of the coil spring in the wide part of the opening, upon operation of the cord, either side of the opening pushes one of the both ends from outside to loosen the coil spring, thereby the screen being freely wound up or down as the cord is operated. Upon release of the cord, a small braking force firstly works between the brake drum and the coil spring. Thereafter, when the weight of the screen is going to rotate the screen-roll, the projection fastens the coil spring on the brake drum, thereby a large braking force preventing the screen-roll from rotating.

On the other hand, when the projection is reversed and fitted in the narrow part of the opening, nothing pushes the both crossed ends from inside, so that either side of the opening rotates the screen-roll with the intervention of the projection upon operation of the cord, thereby the screen being freely operated by the cord. Upon release of the cord, a small braking force acts between the brake drum and the coil spring. As the screen-roll is rotated by the weight of the screen, the side of the opening pushes the coil spring to loosen and decrease the braking force, therefore the device, when the key is reversed, being unavailable for the roll blind without an auxiliary spring-motor to balance the weight of the screen. However, the small braking force, even if decreased, is sufficient to prevent the screen-roll from rotating in the case of the roll blind with an auxiliary spring-motor.

The advantages offered by the invention are mainly that the screen-locking device is adjusted to have either of large and small braking forces. The adjustment is easily performed by reversing the key fitted on the sleeve which is removably inserted into the screen-roll. In the roll blind having a heavy screen without an auxiliary spring-motor, the key is set one way in which the projection is within the both crossed ends of the coil spring to give the device a large braking force and surely prevent the rotation of the screen-roll by the weight of the screen. In the case of the roll blind with an auxiliary spring-motor, the key is set the other way in which the projection is out of the both crossed ends to give the device a small braking force. The small braking force not only prevents the device from making a noise when the screen stops but also allows the screen to be directly pulled down by hand, because the screen-roll rotates the cord-pulley by the intervention of the projection directly fitted in the opening to loosen the coil spring.

One way of carrying out the invention is described in detail below with reference to drawings which illustrate preferred embodiments, in which:

FIG. 1 is a longitudinal section of the roll blind having no auxiliary spring-motor and the locking device in accordance with the invention;

FIG. 2 is a perspective view of the roll blind of FIG. 1;

FIGS. 3 and 4 are sections taken along the lines III—III and IV—IV of FIG. 1;

FIG. 5 is a side elevation of the roll blind of FIG. 1;

FIG. 6 is a section, similar to FIG. 1, of the roll blind with an auxiliary spring-motor; and

FIGS. 7 and 8 are sections taken along the lines VII—VII and VIII—VIII of FIG. 5.

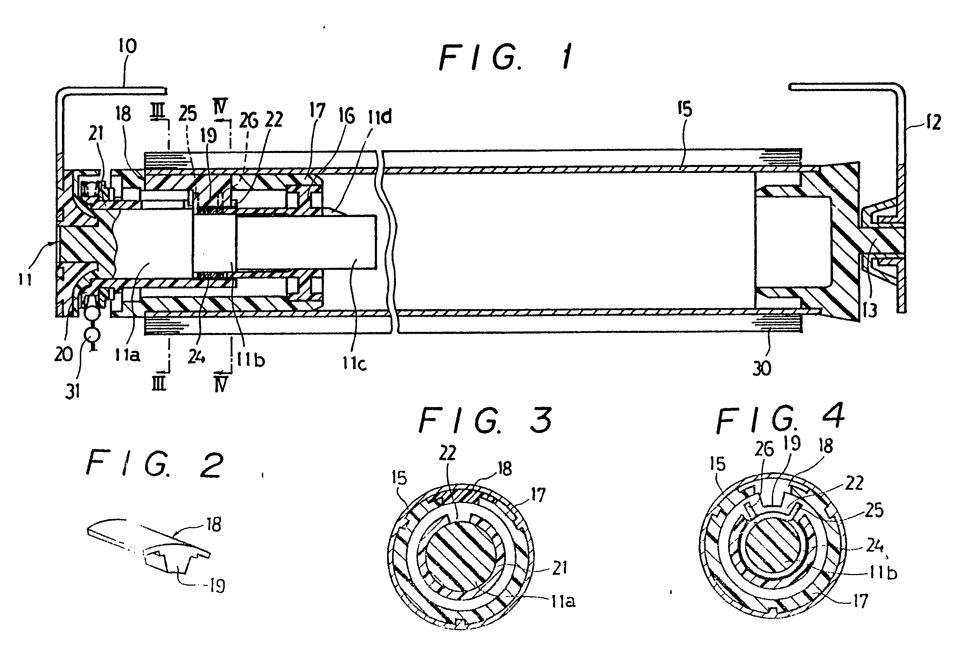

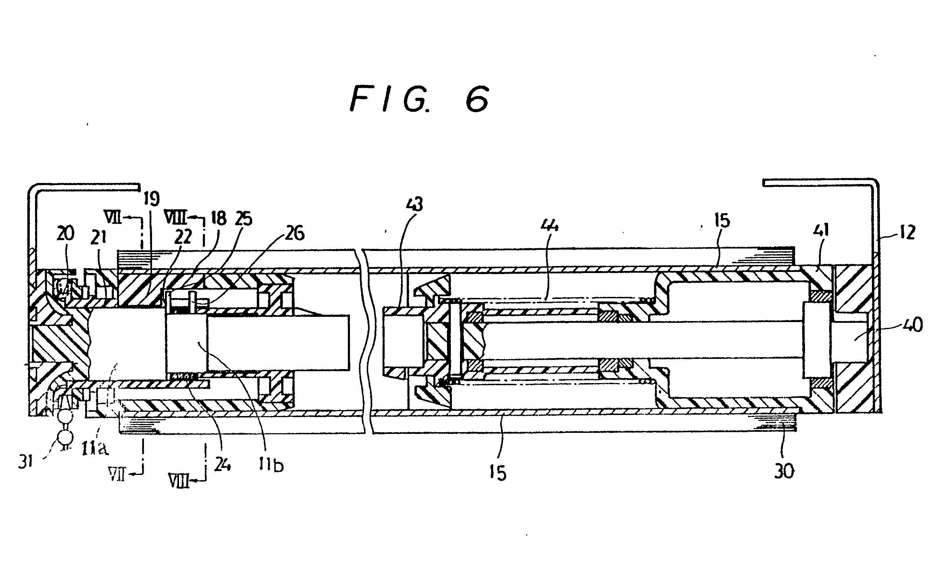

Referring now to FIG. 1 in which is shown a roll blind of the type employing a cord or chain for operation of a screen, a fixed shaft 11 is fixedly supported by one of the brackets 10, 12 the other of which rotatably supports a rotary shaft 13 integral with a screen-roll 15 on which a screen 30 is wound. The fixed shaft 11 has three cylindrical portions, the large outer portion 11a, the middle portion 11b, and the small inner portion 11c formed with a resilient pieces 11d. The large outer portion 11a is rotatably fitted in the tubular portion 21 of a cord-pulley 20 from which a ball chain 31 is hanged. The middle portion or brake drum 11b is somewhat loosely fitted in a coil spring 24. The small inner portion 11c is inserted into a bearing sleeve 16 fixed to a sleeve 17 to put its resilient piece 11d behind the bearing sleeve, thereby the fixed shaft 11 being prevented from slipping out of the bearing sleeve. The sleeve 17 is removably inserted into the screen-roll 15 for rotation therewith as one body. The coil spring 24 is axially defined between the large outer portion 11a and the bearing sleeve 16. The tubular portion 21 extends to cover the brake drum 11b and has a stepped opening 22 consisting of wide and narrow parts, the wide part being over the brake drum 11b, the narrow part being over the large outer portion 11a. The coil spring 24 has its both ends 25, 26 radially outwardly projecting in the wide part of the opening 22. A key 18 is mounted in the sleeve 17 and provided on one side with a projection 19 which radially inwardly extends into a space between the both ends 25, 26 of the coil spring 24 in the opening 22.

Referring to FIG. 2, the key 18 has an arcuate outer periphery included in the cylindrical outer surface of the sleeve. The projection 19 is formed on one side of the key 18.

Referring to FIGS. 3 and 4, the key 18 is fitted in the sleeve 17 which is splined for connection with the screen-roll 15. The both ends 25, 26 are crossed in the V-shaped form when axially viewed as seen in FIG. 4. The key has one side thereof with the projection 19 positioned between the both ends 25, 26 of the coil spring 24 in the wide part of the opening 22 over the brake drum 11b as seen in FIG. 4. The other side without the projection faces the narrow part of the opening 22 in the tubular portion 21 over the large outer portion 11a as seen in FIG. 3.

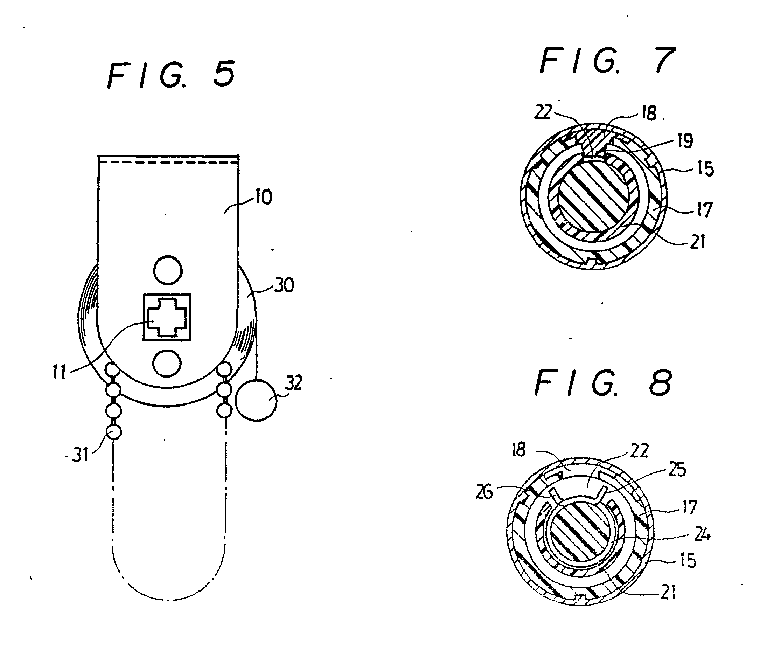

Referring to FIG. 5, the fixed shaft 11 has an outermost portion with a cross-shaped section which is inserted into and fixedly supported by the bracket 10. the ball chain 31 is suspended from the cord-pulley. The screen 30 has a weight bar 32 attached to the lower end of the screen.

In operation, when the ball chain 31 is pulled one side, the pulley 20 rotates in one direction in which one edge of the opening 22 in the tubular portion 21 pushes either of the both V-shaped ends 25, 26 of the coil spring 24 from outside to loosen the coil spring 24, thereby rotating the screen-roll 15 in the one direction with the intervention of the key 18 within the both ends 25, 26 to raise the screen. While the ball chain is pulled down the other side, the pulley 20 rotates in the other direction in which the other edge of the opening 22 in the tubular portion 21 pushes the other end of the coil spring 24 from outside to loosen the coil spring 24, thereby rotating the screen-roll in the other direction with the intervention of the key 18 to lower the screen.

When the ball chain is released, although the screen-roll 15 is driven to rotate by the weight of the screen 30, inclusive of the weight bar 32, the key 18 pushes either of the both ends 25, 26 from inside to fasten the coil spring 24 on the brake drum 11b, thereby there being produced a large braking force to prevent the rotation of the screen-roll 15. The braking force is large enough to surely prevent the rotation of the screen-roll and stop the screen at a desired position.

Referring to FIG. 6 in which the roll blind is equipped with an auxiliary spring-motor 44 to balance the weight of the screen 30, inclusive of the weight bar, the other fixed shaft 40 is fixedly supported by the bracket 12. The other sleeve 41 is rotatably fitted on the other fixed shaft 40 and fixed to the screen-roll 15 as one body. The other fixed shaft 40 has an extension provided with a ring 43. The auxiliary spring-motor 44 has one end attached to the ring 43 and the other end to the sleeve 41. The ring 43 has a role to rotatably support the inner periphery of the screen-roll 15. The auxiliary spring-motor 44 has the initial torque to balance the weight of the screen, inclusive of the weight bar, so that a slight torque is required to raise the screen 30. The other side of the roll blind is similar to that of FIG. 1 except that the key 18 is reversely set. The projection 19 is fixedly fitted in the narrow part of the opening 22 over the large outer portion 11a of the fixed shaft 11, nothing existing betwen the both V-shaped ends 25, 26 in the wide part of the opening 22 over the brake drum 11b.

As seen in FIG. 7, the key 18 is fitted in the sleeve 17 in the screen-roll 15. The projection 19 is set in the narrow part of the opening 22 in the tubular portion 21. As seen in FIG. 8, the other side of the key 18 has the outer and inner surfaces similar to those of the sleeve 17 in the screen-roll 15, there existing nothing between the both V-shaped ends 25, 26 of the coil spring 24 in the wide part of the opening 22 in the tubular portion 21, as seen in FIG. 8.

When the ball chain 31 of the roll blind of FIG. 6 is pulled down, the rotation of the pulley 20 is transmitted to the screen-roll 15 through the intermediary of the key 18 with the projection 19 fitted in the opening 22, thereby the screen being pulled up. While the ball chain 31 is free, a small braking force due to the friction between the inner periphery of the coil spring 24 and the outer surface of the brake drum 11b is sufficient to prevent the screen-roll 15 from rotating. The reason for this is that the auxiliary spring motor 44 has a torque to almost balance the weight of the screen and that the remaining torque is too small to cause the edge of the opening 22 to push either of the both V-shaped ends 25, 26 from outside and loosen the coil spring 24.

When the screen 30 is directly pulled down by hand, the rotation of the screen-roll 15 is transmitted to the tubular portion 21 through the intermediary of the projection 19 of the key 18, so that the edge of the opening 22 pushes either of the both V-shaped ends 25, 26 from outside to loosen the coil spring 24, thereby the coil spring 24 rotating with the screen-roll 15 to lower the screen 30. This means that the screen 30 can be pulled down by hand.

The key 18 is easily reversed because of being simply placed on the outer surface of the sleeve 17. The roll blind is dismounted from the brackets prior to the sleeve 17 is pulled out of the screen-roll 15. Thereafter, the key 18 is easily picked out of the sleeve 17 and reversely reset in the sleeve 17. The sleeve 17 is inserted into the screen-roll 15 again.

Thus, the inventive screen-locking device is easily adjusted to have either of large and small braking forces. For use with a roll blind having no auxiliary spring-motor, the device produces a large braking force when the key is set one way in which the projection is in a space between the both ends (25, 26). On the other hand, for use with a roll blind with an auxiliary spring-motor (44) to balance the weight of the screen (10), the device produces a small braking force when the key is set the other way in which the projection is out of the space between the both ends.

## Claims

1. A screen-locking device for use in roll blinds of the type having a fixed shaft (11), a screen-roll (15) rotatably fitted on said fixed shaft (11), a cord-pulley (20) rotatably mounted on said fixed shaft, said device comprising a brake drum (11b) formed on said fixed shaft (11), a coil spring (24) fitted around said brake drum (11b), said cord-pulley (20) having an opening (22) over said brake drum (11b), said coil spring (24) having the both ends (25, 26) thereof inserted into said opening (22) and crossed in a V-shaped form when axially viewed, characterized in that said screen-roll (15) has one end portion thereof removably fitted on a sleeve (17) which is rotatably mounted on said fixed shaft (11), that said sleeve (17) is set with a key (18) which is formed on one side thereof with a radially inwardly extending projection (19), and that said key (18) is reversibly fitted in said sleeve (17), whereby said device produces a large braking force when said key (18) is set one way in which said projection is in a space between the both ends (25, 26), and a small braking force when said key is set the other way in which said projection is out of the space between the both ends.

2. The device of claim 1, wherein said opening (22) is stepped to have narrow and wide parts, the narrow part being fixedly engageable with said projection (19) when said key (18) is set the other way.

3. The device of claim 1, wherein said key (18) has the outer surface thereof peripherally aligned with that of said sleeve (17) when it is set in said sleeve (17).

## Patentansprüche

1. Sperrvorrichtung für Rollvorhänge mit einem fixierten Schaft (11), einer auf diesen fixierten Schaft (11) drehbar aufgepaßten Vorhangrolle (15), wobei an dem fixierten Schaft (11) eine Schnurrolle drehbar angeordnet ist, eine Bremstrommel (11b) an dem fixierten Schaft (11) und eine Schraubenfeder (24) um die Bremstrommel (11b) gepaßt ist, wobei die Schnurrolle (20) oberhalb der Bremmstrommel (11b) eine Öffnung (22) aufweist, wobei die beiden Enden (25, 26) der Schraubenfeder (24) in die Öffnung (22) eingesetzt sind und sich in Axialrichtung gesehen V-förmig kreuzen, dadurch gekennzeichnet, daß die Vorhangrolle (15) einen Endabschnitt aufweist, der auf eine Hülse (17) entfernbar aufgepaßt ist, die an dem fixierten Schaft (11) drehbar angeordnet ist, daß die Hülse (17) mit einem Keil (18) angeordnet ist, welcher an seiner einen Seite einen sich radial einwärts erstreckenden Vorsprung (19) aufweist, und daß der Keil (18) umkehrbar in die Hülse (17) eingesetzt ist, so daß eine große Bremskraft erzeugt ist, wenn der Keil (18) auf eine Weise eingesetzt ist, bei welcher sich dieser Vorsprung in einem Raum zwischen den beiden Enden (25, 26) der Feder (24) befindet, und eine kleine Bremskraft erzeugt ist, wenn der Keil auf die andere Weise eingesetzt ist, in welcher der Vorsprung sich außerhalb des Raumes zwischen den beiden Enden befindet.

2. Vorrichtung nach Anspruch 1, dadurch gekennzeichnet, daß die Öffnung (22) abgestuft ist und schmale und breite Abschnitte aufweist, und daß der schmale Abschnitt mit dem Vorsprung (19) in Eingriff steht, wenn der Keil (18) in der anderen Weise eingesetzt ist.

3. Vorrichtung nach Anspruch 1, dadurch gekennzeichnet, daß der Keil (18) eine äußere Umfangsfläche aufweist, die mit der Hülse (17) umfangsmäßig ausgerichtet ist, wenn er in diese Hülse (17) eingesetzt ist.

**Revendications**

1. Dispositif de blocage de rideau destiné à être utilisé dans les stores du type ayant un arbre fixe (11) un rouleau (15) d'enroulement de rideau, monté sur l'arbre fixe (11) afin qu'il puisse tourner, une poulie (20) de passage de sangle montée afin qu'elle puisse tourner sur l'arbre fixe, le dispositif comprenant un tambour de freinage (11b) formé sur l'arbre fixe (11), un ressort hélicoïdal (24) disposé autour du tambour de freinage (11b), la poulie (20) de passage de sangle ayant une ouverture (22) disposée au-dessus du tambour de freinage (11b), le ressort hélicoïdal (24) ayant ses deux extrémités (25, 26) qui pénètrent dans ladite ouverture (22) et qui sont croisées avec une forme en V en vue axiale, caractérisé en ce que: le rouleau (15) a une première partie d'extrémité disposée de façon amovible sur un manchon (17) qui est monté de manière qu'il puisse tourner sur l'arbre fixe (11), le manchon (17) est muni d'une clavette (18) qui comporte, d'un côté, une saillie (19) qui dépasse radialement vers l'intérieur, et la clavette (18) est montée de manière réversible dans le manchon (17), si bien que le dispositif crée une grande force de freinage lorsque la clavette (18) est réglée d'une première manière telle que la saillie se trouve dans l'espace compris entre les deux extrémités (25, 26), et une faible force de freinage lorsque la clavette est réglée d'une utre manière dans laquelle la saillie se trouve en dehors de l'espace compris entre les deux extrémités.

2. Dispositif selon la revendication 1, dans lequel l'ouverture (22) a une forme à gradin comprenant des parties étroite et large, la partie étroite étant destinée à coopérer à demeure avec la saillie (19) lorsque la clavette (18) est réglée de l'autre manière.

3. Dispositif selon la revendication 1, dans lequel la clavette (18) a sa surface externe qui est alignée périphériquement sur celle du manchon (17) lorsqu'elle est montée dans le manchon (17).

FIG. 1

FIG. 2

FIG. 3

FIG. 4

EP 0 180 832 B1

FIG. 6

# FIG. 5

# FIG. 7

# FIG. 8

3